# EUROPÄISCHE PATENTSCHRIFT

(11) **EP 0 638 465 B1**
(45) Veröffentlichungstag und Bekanntmachung des Hinweises auf die Patenterteilung: **09.07.1997**
(21) Anmeldenummer: 94112088.3
(22) Anmeldetag: 03.08.1994
(51) Int. Cl.: B60R 21/26, B01J 7/00, B01D 46/16, B01D 46/42

(54) **Gasgenerator mit Halterung für flächenartige Filterelemente**
Gas generator with support for flat filtering element
Générateur de gaz avec dispositif pour supporter un élément filtrant du type plat

(30) Priorität: 13.08.1993 DE 9312093 U
(43) Veröffentlichungstag der Anmeldung: 15.02.1995
(73) Patentinhaber: TEMIC Bayern-Chemie Airbag GmbH, D-84544 Aschau/Inn (DE)
(72) Erfinder: Knobloch, Hermann, D-81739 München (DE)
(74) Vertreter: Prinz, Egon, Dipl.-Ing.

(56) Entgegenhaltungen:
- EP-A- 0 373 288
- EP-A- 0 547 842
- US-A- 3 203 157

## Beschreibung

Die Erfindung betrifft Gasgeneratoren, insbesondere zur Auslösung von passiven Personenrückhaltesystemen in Kraftfahrzeugen mit rohrförmigem oder zylindrischem Gehäuse, an dem Filter- und Rückhalteelemente angeordnet sind. Solche Filter- und Rückhalteelemente stellen beispielsweise Drahtgewebe jeglicher Webart, Metallfaserfliesen, Bleche usw. dar.

Die Auskleidung der rohrförmigen Brennkammern von Gasgeneratoren mit Drahtgeweben, Metallfaserfliesen usw. zur Filterung und Rückhaltung von pyrotechnischen Teilen aus dem Treibgas erfordert entweder eine über den ganzen inneren Umfang anliegende Auskleidung oder bei einer teilweisen Auskleidung eine zusätzliche Befestigung. Siehe EP-A-0 373 288 und EP-A-0 547 842.

Ein Nachteil der Auskleidung über den ganzen Umfang ist der technisch nicht notwendige Materialaufwand, der zu höheren Kosten, zusätzlichem Gewicht, was im Kraftfahrzeugbereich unerwünscht ist, und zu einem weiteren Montagevorgang führt.

Das Anschweißen bei einer teilweisen Auskleidung erfordert miteinander verschweißbare Werkstoffe und spezielle Schweißmaschinen für die Serienfertigung, weshalb auch hier höhere Kosten anfallen und außerdem die Schweißqualität schwer kontrollierbar ist.

Die Aufgabe der Erfindung besteht darin, einen Gasgenerator der eingangs genannten Art anzugeben, dessen Filter- und Rückhalteelemente in einfacher Weise befestigbar sind, ohne die o. a. Nachteile aufzuweisen.

Diese Aufgabe wird durch die kennzeichnenden Merkmale des Patentanspruches 1 gelöst. Hiernach sind auf der Innenfläche eines den Gasgenerator bildenden rohrförmigen Körpers Haltemittel einstückig angeformt, die in Längsrichtung, insbesondere parallel zur Achse des rohrförmigen Körpers verlaufen und zur Aufnahme einclipsbarer flächenhafter Filter- und Rückhalteelemente, die eine für die Clip-Befestigung ausreichende Eigenfederung bzw. Elastizität aufweisen. Ein wesentlicher Vorteil dieser erfindungsgemäßen Halterung von flächenhaften Filter- und Rückhalteelementen besteht darin, daß hierfür keine zusätzlichen Teile benötigt werden. Das Prinzip dieser Halterung ist grundsätzlich auf allen ebenen, gewölbten oder profilierten flächenartigen Filter- und Rückhalteelemente anwendbar, die in sich so stabil sind, daß die Schmalseiten dieser Elemente zumindest geringe Kräfte kurzzeitig oder auf Dauer aufnehmen bzw. ausüben können.

Bei einer bevorzugten Weiterbildung der Erfindung sind als Haltemittel wenigstens zwei parallel angeordnete Stege auf der Innenfläche des rohrförmigen Körpers vorgesehen, wobei zwischen diesen Stegen die Filter- und Rückhalteelemente eingeclipst werden. Dadurch lassen sich die zu befestigenden Filter- und Rückhaltelemente durch einen einfachen Einclipsvorgang in die Halterung dauerhaft in alle Richtungen fixieren. Dieser einfache Montageschritt ist auch besonders gut für eine automatisierte Serienfertigung geeignet.

Mit dieser einfachen erfindungsgemäßen Halterung der Filter- und Rückhalteelemente ist auch ein Gewichtsvorteil zu erzielen, wie er besonders von der Kraftfahrzeugindustrie gefordert wird, um bei dynamischen Beanspruchungen die auftretenden Kräfte zu reduzieren.

Ein weiterer Vorteil besteht darin, daß bei rohrförmigen Körpern die Stege in jeder beliebigen Länge, beispielsweise als Strangpreßprofil hergestellt werden können.

Vorzugsweise können auf der Innenfläche des rohrförmigen Körpers gegenüberliegend jeweils ein Paar von Stegen angeordnet werden.

Im folgenden soll die Erfindung anhand von Ausführungsbeispielen im Zusammenhang mit den Zeichnungen dargestellt und erläutert werden. Es zeigen:
- Figur 1: einen rohrförmigen Körper mit der erfindungsgemäßen Halterung,
- Figuren 2 und 2a: Detaildarstellungen des Ausführungsbeispieles nach Figur 1 und
- Figuren 3 bis 5a: weitere Ausführungsbeispiele der Erfindung in Längs- und Vorderansichten.

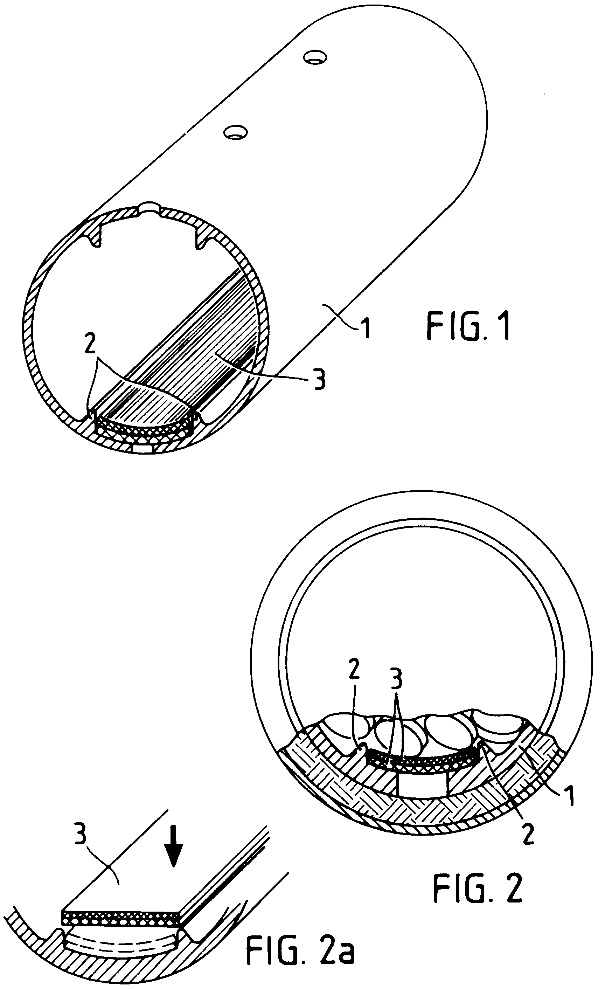

Die Figur 1 zeigt das Prinzip der erfindungsgemäßen Halterung, wonach auf der Innenfläche eines rohrförmigen Körpers 1 auf diametral gegenüberliegenden Seiten jeweils in geringem Abstand benachbarte Stege 2 angeordnet sind, die einstückig an der Innenfläche des Körpers 1 angeformt sind. Ein flächenhaftes Filterelement 3 ist dort zwischen diese beiden Nuten eingeclipst.

Aus den Figuren 2 und 2a ist ersichtlich, daß ein oder mehrere flächenartige Filter- und Rückhalteelemente 3 in die rohrförmige, von dem Körper 1 gebildete Brennkammer in Längsrichtung, insbesondere parallel zur Achse des Körpers 1 eingeführt und anschließend in radialer Richtung in die Halterung 2 eingeclipst werden. Die eingeclipsten Filter- und Rückhalteelemente 3 sind damit vorgespannt und fixiert. Beim Einwirken von statischen oder dynamischen Kräften in Richtung Zentrum auf die angelegten Filter- und Rückhalteelemente tritt durch die Wölbung dieser Elemente eine zusätzliche Erhöhung der Haltekräfte ein.

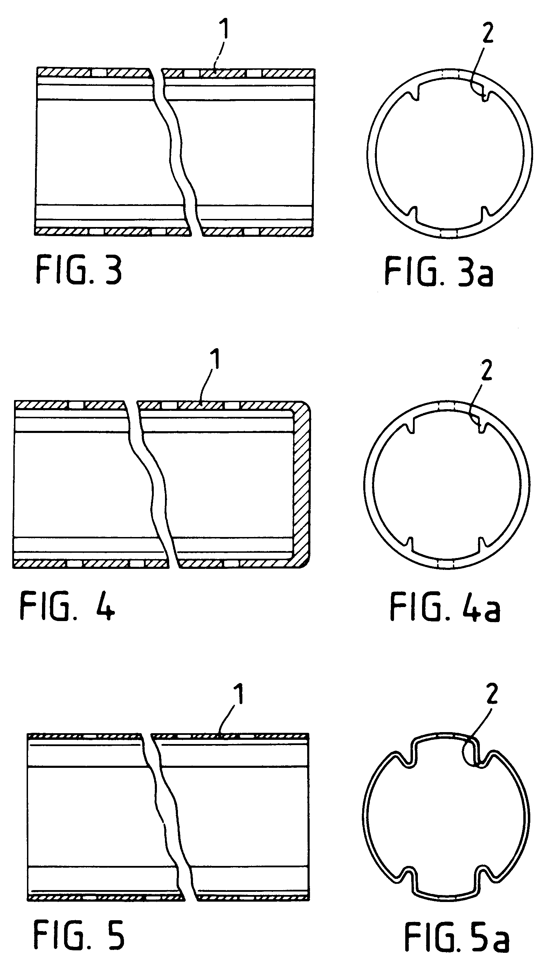

Die Figuren 3 und 3a zeigen ein rohrförmiges Profil eines Körpers 1 mit Halterung 2, wobei dieser rohrförmige Körper 1 als Strangpreßprofil hergestellt wurde und auf Teillängen getrennt ist.

Die Figuren 4 und 4a zeigen ebenfalls einen rohrförmigen Körper 1 mit einer Halterung 2, der jedoch einseitig einen Boden aufweist und beispielsweise durch Fliespressen hergestellt ist.

Schließlich zeigen die Figuren 5 und 5a einen rohrförmigen Körper 1 mit Halterung 2, der aus Blech oder dünnen Rohren hergestellt ist, der insbesondere für die Aufnahme in einem Hüllrohr für den Gasaustritt gemäß Figur 2 geeignet ist.

Die in den Figuren dargestellten rohrförmigen Körper 1 mit der erfindungsgemäßen Halterung 2 stellen jeweils die Brennkammern von Gasgeneratoren dar, wobei jedoch an den Stirnseiten die nötigen Deckel und/oder Böden in diesen Figuren nicht dargestellt sind, da dies, ebenso wie ein in der Figur 2 dargestelltes Hüllrohr dem Fachmann bekannt ist.

Die in den Figuren dargestellte erfindungsgemäße Halterung dient der Befestigung von Filter- und Rückhalteelementen in Brennkammern von Gasgeneratoren, die als Auslösemittel für passive Personenrückhaltesysteme, insbesondere für Airbags in Kraftfahrzeugen zur Anwendung kommen. Diese Erfindung ist jedoch nicht nur auf solche Anwendungen beschränkt, sondern kann auch für solche Gasgeneratoren verwendet werden, die andere Sicherheits- oder Lebensrettungseinrichtungen, wie beispielsweise Rettungsboote, Seenotrettungsbojen, Feuerlöscher oder aufblasbare Notrutschen usw. betreffen.

## Patentansprüche

1. Gasgenerator, insbesondere zur Auslösung von passiven Personenrückhaltesystemen in Kraftfahrzeugen, mit rohrförmigem oder zylindrischem Körper (1), an dem Filter- und Rückhalteelemente (3) angeordnet sind, dadurch gekennzeichnet, daß in dem rohrförmigen Körper (1) Haltemittel (2) einstückig angeformt sind, in Längsrichtung, insbesondere parallel zur Achse des rohrförmigen Körpers (1) verlaufen und zur Aufnahme einclipsbarer, flächenhafter Filter- und Rückhalteelemente (3) dienen, die eine für die Clip-Befestigung ausreichende Eigenfederung bzw. Elastizität aufweisen.

2. Gasgenerator nach Anspruch 1, dadurch gekennzeichnet, daß als Haltemittel wenigstens zwei parallel angeordnete Stege (2) auf der Innenfläche des rohrförmigen Körpers (1) vorgesehen sind, wobei zwischen diesen Stegen (2) die Filter- und Halteelemente (3) eingeclipst werden.

3. Gasgenerator nach Anspruch 2, dadurch gekennzeichnet, daß auf der Innenfläche des rohrförmigen Körpers (1) diametral gegenüberliegend jeweils ein Paar von Stegen (2) angeordnet sind.

## Claims

1. Gas generator, in particular for releasing passive passenger restraint systems in motor vehicles, with a tubular or cylindrical body (1) at which filter and retaining elements (3) are disposed, characterised in that holding means (2) are moulded on in one piece in the tubular body (1), which means extend in the longitudinal direction, in particular parallel to the axis of the tubular body (1), and serve to hold clip-in, planar filter and retaining elements (3) which have an inherent resilience or elasticity which is sufficient for the clip fastening.

2. Gas generator according to claim 1, characterised in that at least two parallel webs (2) are provided as the holding means at the inner surface of the tubular body (1), and the filter and retaining elements (3) can be clipped in between these webs (2).

3. Gas generator according to claim 2, characterised in that a respective pair of webs (2) is disposed at the inner surface of the tubular body (1) in a diametrically opposite arrangement.

## Revendications

1. Générateur de gaz, en particulier pour déclencher des systèmes de retenue passive de passagers dans des véhicules, comportant un corps (1) tubulaire ou cylindrique sur lequel sont agencés des éléments de filtre et de retenue (3), caractérisé en ce que sur la surface intérieure du corps tubulaire sont formés d'une seule pièce des supports (2) qui s'étendent en direction longitudinale, en particulier parallèlement par rapport à l'axe du corps tubulaire (1) et qui servent à recevoir des éléments de filtre et de retenue (3) de type plat susceptibles d'être clipsés, qui présentent un amortissement propre et une élasticité suffisante pour une fixation par clip.

2. Générateur de gaz selon la revendication 1, caractérisé en ce qu'il est prévu comme support au moins deux nervures (2) agencées parallèles sur la face intérieure du corps tubulaire (1), les éléments de filtre et de retenue (3) étant clipsés entre ces nervures (3).

3. Générateur de gaz selon la revendication 2, caractérisé en ce que sur la face intérieure du corps tubulaire (1), une paire respective de nervures (2) est agencée de manière diamétralement opposée.
